# EUROPÄISCHE PATENTSCHRIFT

(11) **EP 0 979 358 B1**
(45) Veröffentlichungstag und Bekanntmachung des Hinweises auf die Patenterteilung: **07.11.2001**
(21) Anmeldenummer: 98924219.3
(22) Anmeldetag: 25.04.1998
(51) Int. Cl.: F16B 35/04, F16B 23/00

(54) **SCHRAUBE**
SCREW
VIS

(30) Priorität: 02.05.1997 DE 19718712
(43) Veröffentlichungstag der Anmeldung: 16.02.2000
(73) Patentinhaber: SFS Industrie Holding AG, 9435 Heerbrugg (CH)
(72) Erfinder: PALM, Erich, CH-9434 Au (CH)
(74) Vertreter: Ludescher, Hans
(86) Internationale Anmeldenummer: EP9802475
(87) Internationale Veröffentlichungsnummer: WO9850706

(56) Entgegenhaltungen:
- EP-A- 0 517 671
- FR-A- 2 491 563
- GB-A- 1 446 437
- US-A- 3 859 888
- US-A- 4 941 787
- US-A- 5 378 101

## Beschreibung

Die Erfindung betrifft eine Schraube zum Verbinden von dünnen Werkstücken, mit einem Schaft und einem einen Werkzeugangriff aufweisenden, scheibenförmigen Kopf, wobei der Schaft mit einem Gewinde versehen ist und an seinem freien, dem Kopf abgewandten Ende eine lochformende oder -bohrende Spitze aufweist, und wobei der Kopf in Achsrichtung der Schraube gemessen eine Höhe aufweist, welche kleiner ist als die doppelte Steigung des auf dem Schaft ausgebildeten Gewindes.

Gerade bei der gegenseitigen Befestigung von relativ dünnen Materialien oder bei der Befestigung von dünnen Materialien auf einem festen Untergrund werden in der Regel selbstbohrende und -gewindeschneidenda Schrauben verwendet, wobei es aus technischen Gründen nicht möglich ist, Senkkopfschrauben einzusetzen, weil in dem einen Bohr- und Einschraubvorgang nicht auch noch eine entsprechende Vertiefung in ein Werkstück eingeformt werden kann, Wenn in diesem Befestigungsbereich anschließend ein Verkleidungselement, z.B. eine Platte, anliegen soll, muß entweder vorher eine entsprechende Ansenköffnung hergestellt werden, oder aber es sind entsprechend hohe Schraubenköpfe in Kauf zu nehmen, die es nicht zulassen, daß nachträglich aufgebrachte Platten großflächig und praktisch eben auf der Unterkonstruktion aufliegen.

Die vorliegende Erfindung hat sich daher zur Aufgabe gestellt, eine Schraube der eingangs genannten Art zu schaffen, mit welcher eine sichere Befestigung möglich ist, ohne daß die Schraube durch einen innenangriff geschwächt, und ohne daß bei einem Überdrehen des Gewindes eine ordentliche Verbindung verhindert wird.

Erfindungsgemäß wird dazu vorgeschlagen, daß an dem Kopf ein Außenwerkzeugangriff ausgebildet ist, und daß zwischen dem Kopf und dem auf dem Schaft vorgesehenen Gewinde ein gewindefreier Schaftabschnitt ausgebildet ist.

Bisher ist in der Fachwelt immer davon ausgegangen worden, daß bei selbstbohrenden und -gewindeschneidenden Schrauben eine entsprechende Höhe des Schraubenkopfes erforderlich ist, um das Drehmoment für den Bohr- und Gewindeformvorgang übertragen zu können. Auch bei Anordnung eines Innenangriffes ist eine entsprechende Höhe des Kopfes notwendig, da der Innenangriff gerade dann, wenn keine Senkkopfausbildung vorgesehen wird, nicht bis in den Bereich des Schaftes der Schraube hineinragen darf.

Durch die vorliegende Erfindung ist es ermöglicht worden, den Kopf einer Schraube mit einer sehr geringen Höhe auszuführen, wobei diese geringe Kopfhöhe auch beim nachträglichen Auflegen und Montieren von Verkleidungsplatten oder dergleichen nicht hindernd im Wege ist. Es hat sich auch gezeigt, daß das Drehmoment für den Bohr- und Gewindeformvorgang speziell bei einer solch geringen Höhe des Kopfes der Schraube in optimaler Weise mit einem Außenwerkzeugangriff übertragen werden kann.

Bei Befestigungen, welche nachträglich beispielsweise durch Verkleidungsplatten abgedeckt werden, ist es üblicherweise ohne Bedeutung, wenn durch das eingesetzte Werkzeug unter Umständen geringfügige Montagespuren hinterlassen werden. Selbst bei einer solch geringen Höhe des Kopfes ist eine ordnungsgemäße Halterung bis zum endgültigen Setzen möglich.

Durch den gewindefreien Schaftabschnitt ist die Möglichkeit gegeben, daß sich die Schraube nach dem endgültigen Setzen überdrehen kann. Dann ist eine feste Verbindung zwischen den beiden Werkstücken gewährleistet, wobei sich die Schraube auch nicht mehr zurückdrehend lösen kann. Gerade bei solchen Befestigungen ist es ja nur erforderlich, daß die beiden Werkstücke in der befestigten Stellung gegeneinander gedrückt werden. Von zusätzlichem Vorteil ist, daß nicht notwendigerweise eine drehmomentabhängige oder auf Anschlag wirkende Abschaltung des Drehwerkzeuges erforderlich ist.

Eine vorteilhafte Ausgestaltung der Erfindung sieht vor, daß der Kopf in Achsrichtung der Schraube gemessen eine Höhe aufweist, welche kleiner ist als die Steigung des auf dem Schaft ausgebildeten Gewindes. Es ist also eine sehr kleine Höhe des Kopfes der Schraube vorgesehen, welche einerseits infolge des Außenwerkzeugangriffes ein optimales Erfassen in einem Werkzeug erlaubt, und andererseits die besonderen Vorteile mit sich bringt, daß keine Ansenköffnung vorhanden sein oder gebildet werden muß und der überstehende Kopf für die nachträgliche Montage von Platten nicht hindernd im Wege steht.

In konstruktiver Hinsicht ist es von Vorteil, wenn der Kopf einen Mehrkant-Außenwerkzeugangriff aufweist. Eine solche Ausführung ist sowohl von der Fertigung als auch von der Handhabung in einem entsprechenden Werkzeug her gesehen als besonders einfach zu bezeichnen.

Es ist aber auch durchaus möglich, daß der Kopf einen unrunden, kurvenförmig verlaufenden Außenwerkzeugangriff aufweist. Durch die erfindungsgemäßen Maßnahmen ist die Möglichkeit vorhanden, hier benutzerspezifisch einen bestimmten Außenwerkzeugangriff vorzusehen, da es im wesentlichen darauf ankommt, einen relativ flachen Kopf und in irgendeiner Form einen Außenwerkzeugangriff zur Verfügung zu haben.

In diesem Zusammenhang ist es ebenfalls denkbar, daß der Kopf an seinem Außenumfang mit Erhebungen und/oder Vertiefungen zur Bildung eines Außenwerkzeugangriffes versehen ist. Somit ist stets eine entsprechend gute Verbindung zwischen dem Kopf und dem Schaft der Schraube vorhanden, um das notwendige Drehmoment übertragen zu können. Dies gelingt deshalb, weil - im Gegensatz zu einer Ausführung mit einem Innenangriff - im Übergangsbereich zwischen dem Kopf und dem Schaft keinerlei zusätzliche Materialschwächungen vorhanden sind.

Um weiter eine Möglichkeit zu schaffen, die Schraube vorab unverlierbar in einem Spezialwerkzeug halten zu können, wird vorgesehen, daß der Kopf durch das Werkzeug zumindest geringfügig hintergriffen werden kann. Dies gelingt erfindungsgemäß dann, wenn der Kopf in Richtung zum Schaft hin konisch angefast ist.

Wenn außerdem noch vorgesehen wird, daß ein gedachter, innerer Hüllkreis an dem Kopf im Durchmesser zumindest annähernd gleich groß ist wie der Außendurchmesser des Gewindes auf dem Schaft, dann kann zusätzlich bewirkt werden, daß die Schraube bereits beim Ansetzen auf dem Werkstück in Achsrichtung ausgerichtet geführt wird. Ist beispielsweise ein Vierkantkopf vorgesehen, stehen praktisch nur die Eckbereiche dieses Vierkantkopfes, welche vom entsprechenden Werkzeug erfaßt werden, über den Außendurchmesser des Gewindes vor. Wenn die Schraube in dieses Werkzeug eingesetzt wird, kann die dann im Querschnitt im wesentlichen quadratische Öffnung auch als Führung für den Gewindebereich des Schaftes herangezogen werden. Bei zunehmendem Eindrehfortschritt wird der Kopf der Schraube langsam aus der Öffnung in dem Drehwerkzeug herausgezogen, wobei der Schaft selbst in diesem fortgeschrittenen Eindrehstadium nicht mehr geführt werden muß.

Weitere erfindungsgemäße Merkmale und besondere Vorteile werden in der nachstehenden Beschreibung anhand der Zeichnung noch näher erläutert. Es zeigen:
Fig. 1 eine Seitenansicht einer erfindungsgemäßen Schraube;
Fig. 2 eine Ansicht dieser Schraube von der Seite des Kopfes;
Fig. 3 eine fertig gesetzte Schraube, welche zwei Werkstücke miteinander verbindet;
Fig. 4 und Fig. 5 zwei besondere Ausbildungsformen des Kopfes einer Schraube.

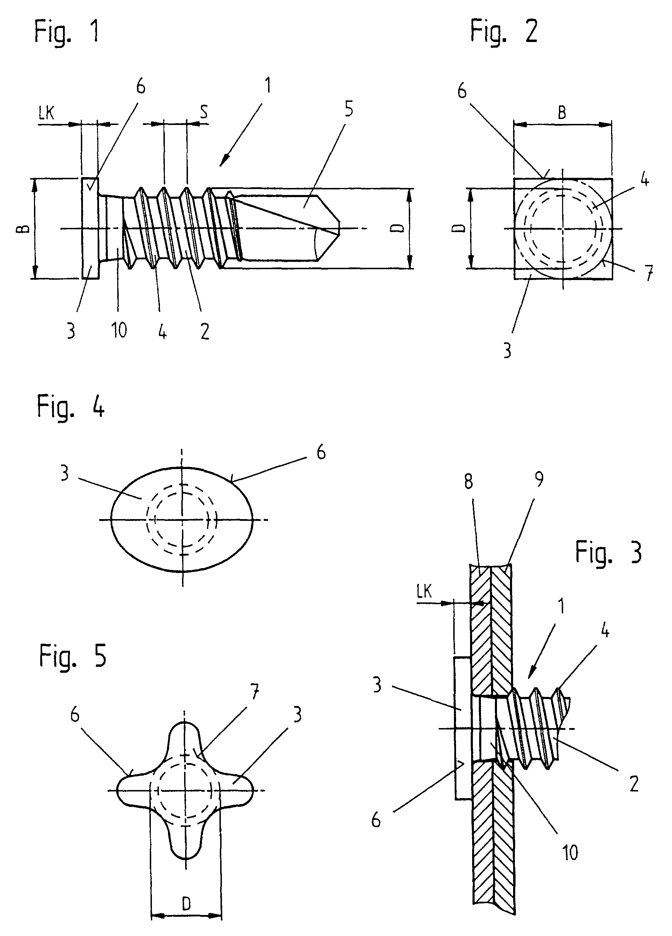

Die Schraube 1 ist mit einem Schaft 2 und einem einen Werkzeugangriff aufweisenden Kopf 3 versehen. Der Schaft weist zumindest teilweise ein Gewinde 4 auf. Am freien, dem Kopf 3 abgewandten Ende des Schaftes 2 ist bei der hier gezeigten Ausführungsform ein Bohrteil 5 ausgebildet. Der Kopf 3 verfügt in Achsrichtung der Schraube 1 gemessen über eine Höhe LK, welche kleiner ist als die doppelte Steigung S des auf dem Schaft 2 ausgebildeten Gewindes 4, und weist einen Außenwerkzeugangriff 6 auf. Aus dem gezeigten Ausführungsbeispiel ist ersichtlich, daß die Höhe LK des Kopfes 3 sogar kleiner ausgeführt ist als die Steigung S des Gewindes 4. Bei der Ausführungsvariante nach den Fig. 1 bis 3 ist somit ein Kopf 3 gegeben, welcher im wesentlichen scheibenförmig ausgebildet ist und einen Mehrkant-Außenwerkzeugangriff 6 aufweist, wobei hier ganz speziell ein Vierkant, also in Draufsicht eine quadratische Form des Kopfes 3, vorgesehen ist. Wenn bei einer solchen Ausgestaltung des Kopfes 3 ein innerer Hüllkreis 7 (Fig. 2) gedacht wird, dann ist ersichtlich, daß dieser zumindest annähernd gleich groß oder wie beim gezeigten Beispiel etwas größer ist als der Außendurchmesser D des Gewindes 4. Ist dann bei einem Werkzeug zum Einsetzen einer Schraube eine entsprechend tiefe Aufnahmeöffnung - welche im Querschnitt quadratisch ausgeführt sein muß, um den Kopf 3 erfassen zu können - vorgesehen, dann ergibt sich im vorderen Bereich dieses Werkzeuges durch die Anlagemöglichkeit des Gewindes 4 eine zusätzliche Führung beim Ansetzen der Schraube auf den miteinander zu verbindenden Werkstücken 8 und 9, obwohl das Werkzeug nur einen relativ kleinen axialen Bereich zur Verfügung hat, um an dem Kopf 3 entsprechend anzugreifen. Die Führung für die Schraube selbst wird umso besser, je näher sich die Breite B des hier quadratischen Schraubenkopfes 3 und der Außendurchmesser D des Gewindes 4 kommen. Die optimalste Führung ist somit dann gegeben, wenn die Breite B praktisch dem Durchmesser D entspricht, d.h. der Hüllkreis 7 den gleichen Durchmesser aufweist wie der Außendurchmesser D des Gewindes 4.

Zwischen dem Kopf 3 und dem auf dem Schaft 2 vorgesehenen Gewinde ist zweckmäßig ein gewindefreier Schaftabschnitt 10 vorhanden. Diese Ausgestaltung ermöglicht bei entsprechend dünnen miteinander zu verbindenden Werkstücken 8 und 9 ein Überdrehen der Schraube, ohne daß das Drehmoment zu stark anwächst. Auch wenn die Schraube überdreht wird, werden die Werkstücke 8 und 9 fest zusammengehalten, und es ist praktisch nicht mehr möglich, daß sich diese Schraubverbindung durch Zurückdrehen der Schraube 1 löst.

Läßt die besondere Ausgestaltung eines Werkzeuges eine feste Halterung des Schraubenkopfes 3 zu, dann kann zusätzlich vorgesehen werden, daß der Kopf 3 in Richtung zum Schaft 2 hin konisch angefast ist. Diesfalls würde im fertig gesetzten Zustand gesehen vom Schraubenkopf 3 in Richtung gegen das Werkstück 8 hin eine Hinterschneidung gebildet, welche es ermöglicht, den Kopf beispielsweise durch radial zu öffnende bzw. zu schließende Backen zu erfassen.

Bei den Ausführungsformen nach den Fig. 4 und 5 ist der Kopf 3 der Schraube 1 ebenfalls scheibenförmig ausgebildet, weist jedoch einen unrunden, kurvenförmig verlaufenden Außenwerkzeugangriff 6 auf. Es sind hier die verschiedensten Gestaltungsmöglichkeiten für einen Außenwerkzeugangriff 6 gegeben, wobei unter Umständen auch darauf geachtet werden kann, daß sich solche Schrauben nur von Befugten eindrehen und gegebenenfalls wieder lösen lassen. Gerade bei solchen Formen bedarf es eines Spezialwerkzeuges, um einen solchen Außenwerkzeugangriff 6 überhaupt ordnungsgemäß erfassen zu können.

Die Ausgestaltung nach Fig. 5 zeigt auf, daß hier ein gedachter Hüllkreis 7 innerhalb des Werkzeugangriffes 6 am Kopf 3 der Schraube 1 gleich groß ausgeführt ist wie der Durchmesser D des Gewindes 4. Bei einer solchen Ausführung ist die Öffnung in dem entsprechenden Werkzeug der Form des Außenwerkzeugangriffes 6 angepaßt, wobei trotzdem eine ausgerichtete Führung für den Schaft 2 im Bereich des Gewindes 4 vorhanden ist.

Im Rahmen der Erfindung können gerade im Bereich des Kopfes 3 verschiedene Ausgestaltungen vorgesehen werden. Zur Bildung eines entsprechenden Außenwerkzeugangriffes sind anstelle eines Mehrkant-Außenwerkzeugangriffes oder anstelle von unrunden, kurvenförmig verlaufenden Außenwerkzeugangriffen auch verschiedene Erhebungen und/oder Vertiefungen möglich.

In der vorstehenden Beschreibung wurde bei der Schraube 1 davon ausgegangen, daß an dem einen Ende des Schaftes 2 ein Bohrteil 5 ausgebildet ist. Es ist genauso denkbar, hier ein entsprechendes Bohrplättchen einzusetzen oder aber eine lochformende Spitze vorzusehen. Die Schraube selbst kann einstückig und durchgehend aus dem gleichen Material bestehen. Es ist aber ebenfalls denkbar, den Bohrteil 5 oder ein entsprechendes Bohrplättchen oder eine Lochformspitze aus einem anderen Werkstoff auszuführen und mit dem restlichen Schaftabschnitt zu verschweißen.

Die erfindungsgemäß vorgesehene, sehr geringe Kopfhöhe erweist sich insbesondere dann als vorteilhaft, wenn auf die miteinander verbundenen Werkstücke 8 und 9 nachträglich noch Verkleidungsplatten oder dergleichen aufgebracht werden müssen. Es ergeben sich dann beispielsweise bei wandhohen Elementen keinerlei Probleme mit den in nur geringem Maße vorstehenden Schraubenköpfen. Die erfindungsgemäßen Maßnahmen sind natürlich auch bei Schrauben einsetzbar, welche in irgendeiner Form als Befestigungselemente eingesetzt werden. Auch wenn die geringe Kopfhöhe nicht deshalb gewählt wird, weil nachträglich noch verschiedene Platten montiert werden sollen, erweist sich ein solch flacher Kopf auch bei anderen Befestigungsarten als ästhetisch, und vor allem ist eine entsprechende Sicherheit gegeben, da zum Lösen einer solchen Schraube kaum geeignete Werkzeuge zur Verfügung stehen.

## Patentansprüche

1. Schraube zum Verbinden von dünnen Werkstücken, mit einem Schaft und einem einen Werkzeugangriff aufweisenden, scheibenförmigen Kopf, wobei der Schaft mit einem Gewinde versehen ist und an seinem freien, dem Kopf abgewandten Ende eine lochformende oder -bohrende Spitze aufweist, und wobei der Kopf in Achsrichtung der Schraube gemessen eine Höhe aufweist, weiche kleiner ist ais die doppelte Steigung des auf dem Schaft ausgebildeten Gewindes, **dadurch gekennzeichnet, daß** an dem Kopf (3) ein Außenwerkzeugangriff (6) ausgebildet ist, und daß zwischen dem Kopf (3) und dem auf dem Schaft (2) vorgesehenen Gewinde (4) ein gewindefreier Schaftabschnitt (10) ausgebildet ist.

2. Schraube nach Anspruch 1, **dadurch gekennzeichnet, daß** der Kopf (3) in Achsrichtung der Schraube (1) gemessen eine Höhe (LK) aufweist, welche kleiner ist als die Steigung (S) des auf dem Schaft ausgebildeten Gewindes (4).

3. Schraube nach Anspruch 1, **dadurch gekennzeichnet, daß** der Kopf (3) einen Mehrkant-Außenwerkzeugangriff (6) aufweist.

4. Schraube nach Anspruch 1, **dadurch gekennzeichnet, daß** der Kopf (3) einen unrunden, kurvenförmig verlaufenden Außenwerkzeugangriff (6) aufweist.

5. Schraube nach einem der Ansprüche 1 bis 4, **dadurch gekennzeichnet, daß** der Kopf (3) an seinem Außenumfang mit Erhebungen und/oder Vertiefungen zur Bildung eines Außenwerkzeugangriffes (6) versehen ist.

6. Schraube nach einem der Ansprüche 1 bis 5, **dadurch gekennzeichnet, daß** der Kopf (3) in Richtung zum Schaft (2) hin konisch angefast ist.

7. Schraube nach einem der Ansprüche 1 bis 6, **dadurch gekennzeichnet, daß** ein gedachter, innerer Hüllkreis (7) an dem Kopf (3) im Durchmesser zumindest annähernd gleich groß ist wie der Außendurchmesser (D) des Gewindes (4) auf dem Schaft (2).

## Claims

1. A screw (1) for connecting thin workpieces, with a shank and a disc-like head for tool engagement, wherein the shank is provided with a screw-thread and at its free end remote from the head has a hole-forming or hole-boring tip, and wherein the head, measured in the axial direction of the screw, is of a height which is less than double the pitch of the screw-thread formed on the shank, **characterised in that** an external tool engagement portion (6) is formed on the head (3), and **in that** a threadless shank portion (10) is formed between the head (3) and the screw-thread (4) provided on the shank (2).

2. A screw according to Claim 1, **characterised in that** the head, measured in the axial direction of the screw (1), (3) is of a height (LK) which is less than the pitch (S) of the screw-thread (4) formed on the shank.

3. A screw according to Claim 1, **characterised in that** the head (3) has a polygonal external tool engagement portion (6).

4. A screw according to Claim 1, **characterised in that** the head (3) has a non-circular external tool engagement portion (6) extending in a curve.

5. A screw according to any one of Claims 1 to 4, **characterised in that** the head (3) is provided on its outer periphery with projections and/or recesses so as to form an external tool engagement portion (6).

6. A screw according to any one of Claims 1 to 5, **characterised in that** the head (3) is conically chamfered towards the shank (2).

7. A screw according to any one of Claims 1 to 6, **characterised in that** an imaginary internal envelope circle (7) on the head (3) is at least approximately as large in diameter as the outer diameter (D) of the screw-thread (4) on the shank (2).

## Revendications

1. Vis pour relier des pièces minces, comprenant un corps et une tête en forme de rondelle comportant un moyen de préhension pour un outil,
le corps étant muni d'un filetage et son extrémité opposée à celle de la tête comportant une pointe perforeuse ou perceuse, et
la tête ayant une hauteur, mesurée dans la direction axiale de la vis, qui est inférieure au double du pas du filetage réalisé sur le corps,
**caractérisée en ce que**
la tête (3) comporte un moyen de préhension extérieur (6) pour un outil et
entre la tête (3) et le filetage (4) prévu sur le corps (2) il y a un segment de corps (10) sans filetage.

2. Vis selon la revendication 1,
**caractérisée en ce que**
la tête (3) a une hauteur (LK), mesurée dans la direction axiale de la vis (1), qui est inférieure au pas (S) du filetage (4) réalisé sur le corps.

3. Vis selon la revendication 1,
**caractérisée en ce que**
la tête (3) a une prise extérieure d'outil en forme de multipans (6).

4. Vis selon la revendication 1,
**caractérisée en ce que**
la tête (3) a une prise extérieure d'outil (6) non circulaire, avec un tracé en forme de courbe.

5. Vis selon l'une quelconque des revendications 1 à 4,
**caractérisée en ce que**
la tête (3) comporte, à sa périphérie, des bossages et/ou des creux pour former une prise extérieure d'outil (6).

6. Vis selon l'une quelconque des revendications 1 à 5,
**caractérisée en ce que**
la tête (3) a un congé conique en direction du corps (2).

7. Vis selon l'une quelconque des revendications 1 à 6,
**caractérisée en ce que**
le cercle enveloppe intérieur (7), théorique, au niveau de la tête (3), a un diamètre au moins approximativement égal au diamètre extérieur (D) du filetage (4) du corps (2).
